# EUROPÄISCHE PATENTSCHRIFT

(11) **EP 2 959 151 B1**
(45) Veröffentlichungstag und Bekanntmachung des Hinweises auf die Patenterteilung: **04.08.2021**
(21) Anmeldenummer: 14700629.0
(22) Anmeldetag: 14.01.2014
(51) Int. Cl.: F02M 26/67, F16K 1/00, F16K 41/00, F02M 26/54, F02M 26/73, F02M 26/74

(54) **ABGASVENTILVORRICHTUNG FÜR EINE VERBRENNUNGSKRAFTMASCHINE**
EXHAUST GAS DEVICE FOR AN INTERNAL COMBUSTION ENGINE
SOUPAPE DE GAZ D'ECHAPPEMENT POUR UN MOTEUR DE COMBUSTION INTERNE

(30) Priorität: 22.02.2013 DE 102013101785
(43) Veröffentlichungstag der Anmeldung: 30.12.2015
(73) Patentinhaber: Pierburg GmbH, 41460 Neuss (DE)
(72) Erfinder: SIMONS, Norbert, 40233 Düsseldorf (DE); SOGLOWEK, Rafael, 40549 Düsseldorf (DE); BARABASCH, Guido, 41066 Mönchengladbach (DE)
(74) Vertreter: terpatent Patentanwälte ter Smitten Eberlein-Van Hoof Rütten Daubert
(86) Internationale Anmeldenummer: PCT/EP2014/050596
(87) Internationale Veröffentlichungsnummer: WO 2014/127930

(56) Entgegenhaltungen:
- EP-A2- 1 035 319
- DE-A1- 2 628 170
- DE-A1-102011 050 263
- FR-A1- 2 660 016
- US-A- 4 630 445
- US-A- 5 685 519

## Beschreibung

Die Erfindung betrifft eine Abgasventilvorrichtung für eine Verbrennungskraftmaschine mit einem Aktor, einem Aktorgehäuse, einer Ventilstange, die über den Aktor translatorisch bewegbar ist, einem Regelkörper, der auf der Ventilstange angeordnet ist, einem Strömungsgehäuse, einem Ventilsitz, der im Strömungsgehäuse angeordnet ist und auf den der Regelkörper absenkbar ist und von dem der Regelkörper abhebbar ist und einem topfförmigen Abschirmelement, an dessen Boden eine Öffnung ausgebildet ist, durch die die Ventilstange ragt.

Im Abgasbereich eingesetzte Ventile und insbesondere Abgasrückführventile dienen der Reduktion von Abgasemissionen. Dabei werden von an den jeweiligen Betriebszustand der Brennkraftmaschine angepasste Abgasmengen zur Reduzierung der umweltschädlichen Anteile, insbesondere von Stickoxiden zum Zylinder der Verbrennungskraftmaschine zurückgeführt. Die Abgasrückführventile bestehen üblicherweise aus einem Aktor, der in Wirkverbindung mit einer Ventilstange steht, die über eine Führungsbuchse in einem Gehäuse des Ventils geführt wird und an ihrem dem Aktuator entgegengesetzten Ende zumindest einen Regelkörper aufweist, der mit einem entsprechendem Ventilsitz korrespondiert. Die meisten Abgasrückführventile sind dabei so ausgeführt, dass die Führungsbuchse im geschlossenen Zustand des Ventils in dem Frischluft enthaltenden Bereich angeordnet ist und von der Abgasseite durch den Ventilschließkörper getrennt ist. Bei einem Öffnen des Ventils also einem Abheben des Ventilschließkörpers vom Ventilsitz strömt jedoch Abgas in Richtung des Saugrohres, so dass eine Verbindung des heißen, rußhaltigen oder anderweitig durch anbackende und klebende Substanzen belasteten Abgases zum Aktorgehäuse entsteht. Hierdurch steigt die thermische Belastung des Aktors, da Abgas sowohl das Aktorgehäuse aufheizt als auch entlang der Ventilstange in den Bereich der Führungsbuchse gelangen kann, wodurch sich nicht zuletzt aufgrund der Temperaturunterschiede Ablagerungen an der Ventilstange beziehungsweise in der Führungsbuchse bilden, die die Funktion des Ventils beeinträchtigen können.

Um dieses Problem zu vermeiden, wird beispielsweise in der DE 103 36 976 A1 ein Abgasrückführventil vorgeschlagen, welches ein Abschirmblech aufweist, das sich in den durchströmten Kanal um die Ventilstange herum erstreckt, so dass bei Bewegung der Ventilstange in Richtung des Aktors Ruß von der Ventilstange abgeschert wird. Des Weiteren wird ein Eindringen von Abgas in die Führungsbuchse deutlich reduziert. Ein Schutz vor thermischer Belastung des Aktors wird nicht offenbart.

Des Weiteren ist aus der DE 100 48 499 A1 ein Abgasrückführventil bekannt, bei dem zwischen dem Aktorgehäuse und dem Strömungsgehäuse ein topfförmiges Wärmeschutzelement angeordnet ist, welches sich in eine Öffnung des Strömungsgehäuses erstreckt und an dessen Boden eine Öffnung zur Durchführung der Ventilstange ausgebildet ist. Allerdings besteht ein umlaufender Abstand zwischen dem Strömungsgehäuse und dem Wärmeschutzelement, so dass weiterhin eine recht große Fläche zum direkten Kontakt des warmen Abgases zum Aktorgehäuse zur Verfügung steht.

Aus der EP 1 035 319 A2 ist ein elektromagnetisch aktuierbares Abgasrückführventil bekannt, welches an ein Strömungsgehäuse geschraubt ist. Eine Ventilstangenabschirmung, die dazu dient, die Ventilstange von Ablagerungen zu befreien, erstreckt sich von einem Kragen eines Ventilführungselementes schräg zur Ventilstange. Eine thermische Abschirmung wird nicht erzielt. Stattdessen ist die Ventilstange hohl ausgebildet, so dass die Wärme des Abgases direkt in den Steller geleitet wird.

Die US 5,685,519 B offenbart ein Abgasrückführventil mit einem elektromagnetischen Steller, welches ebenfalls ein Element zum Abkratzen von Ablagerungen an der Ventilstange aufweist und als Gehäuseelement für den Steller und Aufnahme für ein Radiallager dient. Entsprechend wird auch Wärme in Richtung des Stellers geleitet.

Des Weiteren ist aus der US 4,630,445 A ein Waste-Gate-Ventil bekannt, welches einen pneumatischen Aktor aufweist. Zwischen einem Befestigungsflansch des Aktors und dem Strömungsgehäuse ist vollumfänglich ein Kragen eines Abschirmelementes eingeklemmt, welches sich seitlich bis an die Wände des Strömungsgehäuses erstreckt, jedoch eine Öffnung um die Ventilstange aufweist, über die ein Gasaustausch stattfinden soll.

Entsprechend besteht bei den bekannten Ausführungen der Nachteil, dass entweder ein hoher Bauraumbedarf vorliegt oder eine große Wärmemenge aus dem Aktorgehäuse beziehungsweise einem zwischengelagerten Gehäuse abgeführt werden muss, da andernfalls eine Schädigung des Aktors bei hohen auftretenden Abgastemperaturen zu befürchten ist.

Es stellt sich daher die Aufgabe, eine hohe thermische Belastung des Aktorgehäuses zu vermeiden, ohne einen erhöhten Bauraum vorsehen zu müssen. Dabei sollen die zur notwendigen Wärmeabführung aus dem Aktorgehäuse benötigten Kühlmittelmengen möglichst weit reduziert werden, indem in das Aktorgehäuse eindringende Wärmeströme möglichst reduziert werden sollen.

Diese Aufgabe wird durch eine Abgasventilvorrichtung mit den Merkmalen des Hauptanspruchs 1 gelöst. Dadurch, dass sich das topfförmige Abschirmelement von einem Befestigungsflansch des Aktorgehäuses in das Strömungsgehäuse erstreckt und sich Seitenwände des Abschirmelementes radial bis unmittelbar vor seitlich begrenzende Wände und gegenüberliegend zu den seitlich begrenzenden Wänden des Strömungsgehäuses axial erstrecken, wobei sich vom offenen Ende des topfförmigen Abschirmelementes mehrere Arme erstrecken, über die das Abschirmelement am Aktorgehäuse oder zwischen Aktorgehäuse und Strömungsgehäuse befestigt ist, schirmt das Abschirmelement das Aktorgehäuse beinahe vollständig vor einer direkten Berührung mit dem Abgas ab. Die Luftschicht im Raum wirkt dabei isolierend gegenüber dem Aktor. Unmittelbar gegenüberliegend bedeutet in diesem Zusammenhang, dass zwischen dem Strömungsgehäuse und dem Abschirmelement keine feste Anlage oder Presspassung, also keine Berührung vorliegt, sondern ein normales Einschieben möglich ist, wozu ein Spalt von bis zu 1mm ausreichend ist. Eine Befestigung des Abschirmelementes ist möglich, ohne zusätzliche Bauteile verwenden zu müssen.

Vorzugsweise erstreckt sich vom Rand der Öffnung am Boden des Abschirmelementes ein Kragen in Richtung des Regelkörpers, dessen Innendurchmesser am zum Regelkörper weisenden axialen Ende im Wesentlichen dem Außendurchmesser der Ventilstange entspricht. Dieser Kragen dient als Abstreifer für Ablagerungen auf der Ventilstange, die so mit jeder Bewegung der Ventilstange von dieser abgeschert werden.

Dabei ist es vorteilhaft, wenn sich die Arme in einem ersten Abschnitt axial vom offenen Ende des topfförmigen Abschirmelementes in Richtung des Aktorgehäuses erstrecken. So ist eine Befestigung möglich, bei der die Wand des Strömungsgehäuses und die Seitenwand des Abschirmelementes unmittelbar gegenüberliegend zueinander angeordnet werden können.

In einer hierzu weiterführenden Ausführungsform erstrecken sich die Arme in einem zweiten Abschnitt abgewinkelt vom ersten Abschnitt nach radial außen. Über diesen Bereich kann dann auf einfache Weise die Befestigung des Abschirmelementes erfolgen.

Vorzugsweise ist das Abschirmelement ein Tiefziehteil aus nicht rostendem Blech. Ein derartiges Bauteil ist kostengünstig herstellbar, besitzt ein geringes Gewicht und weist auch im thermisch und korrosiv belasteten Abgasbereich eine hohe Lebensdauer auf.

Um eine Befestigung des Abschirmelementes durchführen zu können und gleichzeitig das Strömungsgehäuse direkt an das Außengehäuse des Abschirmelementes heranführen zu können, sind im Aktorgehäuse am zum Abschirmelement weisenden Boden Taschen ausgebildet, in die die Arme des Abschirmelementes greifen. In diesen Taschen kann dann die Befestigung erfolgen.

Besonders vorteilhaft ist die Befestigung durchzuführen, wenn die radiale Erstreckung der Taschen kleiner ist als die radiale Erstreckung der Arme des Abschirmelementes, so dass das Abschirmelement über eine Federwirkung der Arme in den Taschen des Aktorgehäuses eingeklemmt ist. So kann eine Vormontage des Abschirmelementes am Aktorgehäuse unabhängig vom Aufsetzen des Strömungsgehäuses erfolgen, ohne zusätzliche Befestigungselemente verwenden zu müssen.

Vorzugsweise ist der radial äußere Bereich der Taschen durch das Strömungsgehäuse verschlossen, so dass einerseits die Berührungsfläche des Abgases zum Aktorgehäuse minimiert wird und die Taschen ebenfalls isolierend wirken und andererseits ein Herausfallen des Abschirmelementes auch bei auftretenden starken Vibrationen zuverlässig verhindert wird.

Um einen zusätzlichen Schutz des Aktors vor thermischer Überlastung zu erhalten, ist im Aktorgehäuse zwischen dem Abschirmelement und dem Aktor ein Kühlmittelkanal ausgebildet, über den die noch ins Aktorgehäuse gelangende Wärme abgeführt wird.

Besonders vorteilhaft ist es, wenn dieser Kühlmittelkanal radial außerhalb des Abschirmelementes angeordnet ist, da in diesem Bereich aufgrund der fehlenden isolierenden Wirkung des Abschirmelementes die größte Wärmemenge vom Strömungsgehäuse in das Aktorgehäuse eindringen kann und auf diese Weise sofort wieder abgeführt werden kann.

Eine besonders gute isolierende Wirkung zwischen dem Abgaskanal und dem Aktorgehäuse wird durch das Abschirmelement erzielt, wenn dieses topfförmige Abschirmelement mindestens einen Umfang aufweist, der einer Berührungsfläche des Aktorgehäuses an einem Befestigungsflansch des Aktorgehäuses zur zum Abschirmelement entgegengesetzten Seite entspricht oder zwischen einem radial über das Abschirmelement ragenden Bereich der Berührungsfläche und der zum Abschirmelement axial entgegengesetzten Seite des Befestigungsflansches im Aktorgehäuse ein Kühlmittelkanal angeordnet ist. Eine direkte Wärmeleitung vom Strömungsgehäuse oder vom Abgaskanal in das Aktorgehäuse wird so vermieden, was zu einer deutlich verringerten thermischen Belastung des Aktors führt.

Vorzugsweise weist der Aktor einen Elektromotor mit nachgeschaltetem Getriebe auf. Diese Aktoren haben sich bewährt, da sie sehr genau und schnell regelbar sind.

In einer besonderen Ausgestaltung der Erfindung weist das Aktorgehäuse ein Getriebegehäuseteil und ein Elektromotorgehäuseteil auf, wobei das Abschirmelement am Boden des Getriebegehäuseteils befestigt ist. Eine solche Zweiteilung des Aktorgehäuses vereinfacht die Montage und Herstellbarkeit.

Es wird somit eine Abgasventilvorrichtung geschaffen, bei der der Aktor im Vergleich zu bekannten Ausführungen deutlich besser vor thermischer Überlastung geschützt ist und somit auch in sehr hohen Temperaturbereichen ein elektrischer Aktor eingesetzt werden kann, ohne dass eine Überhitzung zu befürchten ist. Des Weiteren können weitere Funktionen, wie das Abschaben von Ablagerungen durch die erfindungsgemäße Ventilvorrichtung zusätzlich wahrgenommen werden. Der Wärmeübergang in das Aktorgehäuse aus dem Strömungsgehäuse beziehungsweise aus dem Abgaskanal wird deutlich reduziert.

Ein Ausführungsbeispiel einer erfindungsgemäßen Abgasventilvorrichtung ist in den Figuren dargestellt und wird nachfolgend beschrieben.

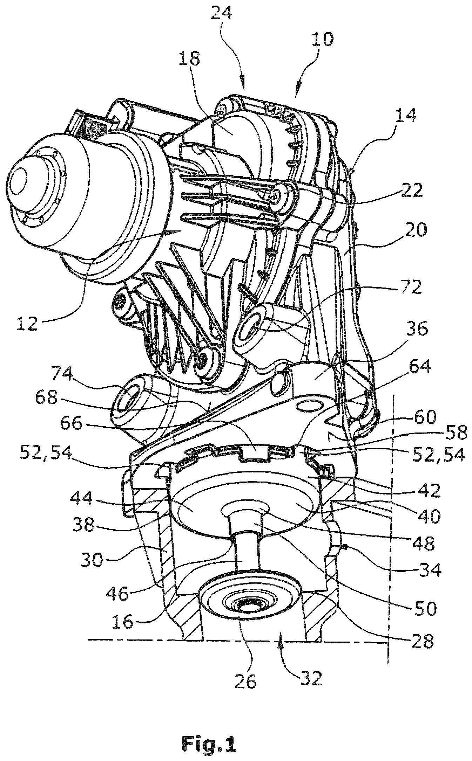

Figur 1 zeigt in perspektivischer Ansicht eine erfindungsgemäße Abgasventilvorrichtung mit geschnittenem Strömungsgehäuse.

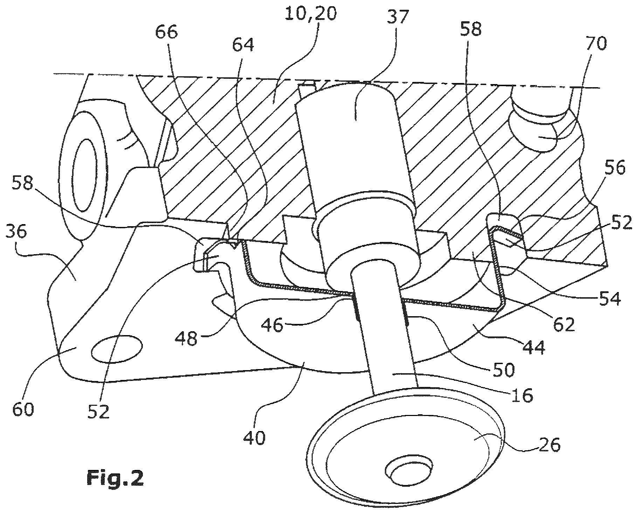

Figur 2 zeigt in perspektivischer Darstellung einen Ausschnitt der erfindungsgemäßen Abgasventilvorrichtung in vergrößerter Darstellung ohne Strömungsgehäuse.

Die erfindungsgemäße Abgasventilvorrichtung weist einen in einem Aktorgehäuse 10 angeordneten Elektromotor 12 auf, der ein ebenfalls im Aktorgehäuse 10 angeordnetes Getriebe 14 antreibt. Dieses Getriebe 14 steht mit einer Ventilstange 16 in Verbindung, so dass die rotatorische Bewegung des Elektromotors 12 über das Getriebe 14 beispielswiese über eine Exzenter-Kulissenverbindung in bekannter Weise in eine translatorische Bewegung der Ventilstange 16 umgewandelt wird.

Im vorliegenden Ausführungsbeispiel besteht das Aktorgehäuse 10 aus einem Elektromotorgehäuseteil 18, welches den Elektromotor 12 mit Ausnahme der zum Getriebe 14 gewandten Seite umschließt und einem Getriebegehäuseteil 20, an welchem das Elektromotorgehäuseteil 18 über Schrauben 22 befestigt ist und in dem das Getriebe 14 angeordnet ist.

Das Aktorgehäuse 10 mit dem darin angeordneten Elektromotor 12 und dem Getriebe 14 bilden einen Aktor 24 der Abgasventilvorrichtung. Bei Betätigung des Aktors 24 wird die Ventilstange 16 in eine translatorische Bewegung versetzt. Dadurch wird ein Regelkörper 26 in Form eines Ventiltellers von einem Ventilsitz 28 abgehoben oder auf diesen abgesetzt. Der Ventilsitz 28 ist in einem Strömungsgehäuse 30 ausgebildet, welches einen Abgaseinlass 32 und einen mit einem Lufteinlasskanal verbindbaren Abgasauslass 34 aufweist.

Zur Befestigung des Aktorgehäuses 10 am Strömungsgehäuse 30 weist der Aktor 24 einen Befestigungsflansch 36 auf, über den das Aktorgehäuse 10 mittels Schrauben am Strömungsgehäuse 30 befestigt wird. Im Aktorgehäuse 10 und in diesem Befestigungsflansch 36 ist eine nicht dargestellte Bohrung ausgebildet, in der eine Lagerbuchse 37 angeordnet ist, in der die Ventilstange 16 gelagert ist und durch die die Ventilstange 16 aus dem Aktorgehäuse 10 in das Strömungsgehäuse 30 ragt.

Axial angrenzend zum Befestigungsflansch 36 erstrecken sich hohlzylinderförmig seitlich begrenzende Wände 38 des Strömungsgehäuses 30, in denen beabstandet vom Befestigungsflansch 36 der Abgasauslass 34 ausgebildet ist.

Zwischen diesen Wänden 38 ist erfindungsgemäß ein an den Befestigungsflansch 36 angrenzendes topfförmiges Abschirmelement 40 angeordnet, dessen Seitenwände 42 radial den seitlich begrenzenden Wänden 38 des Strömungsgehäuses 30 gegenüberliegen. Zur leichteren Montage kann es dabei notwendig sein, einen Spalt von bis zu 1mm zwischen den gegenüberliegenden Wänden vorzusehen, wobei dieser Spalt möglichst klein gewählt wird. Während sich das Abschirmelementes 40 somit radial bis unmittelbar vor die seitlich begrenzenden Wände 38 erstreckt, kann, entspricht die axiale Erstreckung etwa dem Abstand des Abgasauslasses 34 zum Befestigungsflansch 36. In einem Boden 44 des Abschirmelementes 40 Ist eine Öffnung 46 ausgebildet, durch die die Ventilstange 16 ragt. Von einem begrenzenden Rand 48 dieser Öffnung 46 erstreckt sich in Richtung des Regelkörpers 26 ein Kragen 50, dessen axiales Ende einen Innendurchmesser aufweist, der im Wesentlichen dem Außendurchmesser der Ventilstange 16 entspricht, so dass bei Bewegung der Ventilstange 16, die daran vorhandenen Ablagerungen abgeschert werden.

Zur Befestigung des Abschirmelementes 40 erstrecken sich von dessen offenen axialen Ende sieben Arme 52 zunächst in einem ersten Abschnitt 54 axial in Richtung des Befestigungsflansches und in einem zweiten Abschnitt 56 im nicht eingebauten Zustand vom ersten Abschnitt 54 nach radial außen. Diese Arme 52 ragen in Taschen 58, die in einem Boden 60 des Aktorgehäuses 10 beziehungsweise des Befestigungsflanschs 36 als radial und axial begrenzte Ausnehmungen ausgebildet sind. Die axiale Ausdehnung der Taschen entspricht zumindest der Länge des ersten Abschnitts 54 der Arme 52. Die Breite entspricht zumindest der Breite der Arme 52 und die radiale Erstreckung ist geringfügig kleiner als die radiale Erstreckung des zweiten Abschnitts 56 der Arme 52.

Zusätzlich erstreckt sich vom Befestigungsflansch 36 axial ein ringförmiger Vorsprung 62 in Richtung des Regelkörpers 26, dessen Höhe geringer ist als die Höhe des Abschirmelementes 40 und dessen Außendurchmesser im Wesentlichen dem Innendurchmesser der Seitenwände 42 des Abschirmelementes 40 entspricht. Wird nun das Abschirmelement 40 über diesen ringförmigen Vorsprung 62 geschoben greifen die Abschnitte 54, 56 des Abschirmelementes 40 in die Taschen 58, wobei die zweiten Abschnitte 56 des als tiefgezogenen Bleches ausgeführten Abschirmelementes 40 aufgrund der geringeren radialen Ausdehnung der Taschen 58 verbogen werden und sich mit ihrem Ende gegen die äußere Begrenzung der Taschen 58 anlegen. Es entsteht eine Klemm- und Federkraft, die ein Lösen des Abschirmelementes 40 verhindert.

Anschließend wird das Strömungsgehäuse 30 am Befestigungsflansch 36 befestigt, wobei dieses einen radial äußeren Bereich der Taschen 58 jenseits des ersten Abschnitts 54 der Arme 56 verdeckt, so dass ein Lösen des Abschirmelementes 40 unmöglich wird.

Um beim Aufschieben die korrekte Lage des Abschirmelementes 40 sicher zu stellen, sind an den Seitenwänden 42 des Abschirmelementes 40 zwei Ausnehmungen 64 ausgebildet, in die korrespondierend geformte Vorsprünge 66 greifen, die sich vom Befestigungsflansch 36 in das Strömungsgehäuse 30 erstrecken.

Dieses Abschirmelement 40 verhindert einen direkten Kontakt des heißen Abgases zum Aktorgehäuse 10 und somit zum hitzeempfindlichen Elektromotor 12. Diese Abschirmung wird noch einmal dadurch verbessert, dass eine Berührungsfläche 68, welche die Fläche ist, von der aus sich das Aktorgehäuse 10 vom Befestigungsflansch 36 aus erstreckt, kleiner ist als das Abschirmelement 40 und bezüglich des Befestigungsflansches 36 unmittelbar gegenüberliegend zu diesem angeordnet ist.

Der einzige Bereich des Aktorgehäuses 10, der gegenüberliegend zum Abschirmelement 40 radial über dieses hervorsteht, ist ein Teil des Aktorgehäuses 10 in dem ein zumindest teilkreisförmig die Ventilstange 16 umgebender Kühlmittelkanal 70 mit einem Kühlmitteleinlassstutzen 72 und einem Kühlmittelauslassstutzen 74 ausgebildet ist. Somit wird Wärme, die über die Verbindungsflächen des Strömungsgehäuses 30 zum Aktorgehäuse 10 gelangt, unmittelbar abgeführt.

Die beschriebene Abgasventilvorrichtung bietet somit einen exzellenten Schutz des Aktors vor zu hoher thermischer Belastung. Der Raum im Innern des Abschirmelementes weist eine hohe Isolationswirkung auf. Durch die unmittelbare Nähe der Seitenwände des Abschirmelementes zu den Wänden des Strömungsgehäuses wird ein direkter thermischer Kontakt des Abgases zum Aktorgehäuse weitestgehend verhindert. Über das Strömungsgehäuse in das Aktorgehäuse eindringende Wärme wird zusätzlich abgeführt. Des Weiteren wird ein Steckenbleiben des Ventils aufgrund von Ablagerungen auf der Ventilstange durch den Kragen vermieden, ohne zusätzliche Bauteile nutzen zu müssen. Eine Vormontage des Abschirmelementes am Aktorgehäuse ist möglich, so dass ein Transport des Ventils ohne Strömungsgehäuse zu einem kundenseitig zur Verfügung gestellten Strömungsgehäuse im komplett montierten Zustand möglich wird.

Es sollte deutlich sein, dass der Schutzbereich des Hauptanspruchs nicht auf das beschriebene Ausführungsbeispiel begrenzt ist. So können insbesondere die Art der Befestigung und die Anzahl der Arme des Abschirmelementes variiert werden.

## Patentansprüche

1. Abgasventilvorrichtung für eine Verbrennungskraftmaschine mit einem Aktor (24),
einem Aktorgehäuse (10),
einer Ventilstange (16), die über den Aktor (24) translatorisch bewegbar ist,
einem Regelkörper (26), der auf der Ventilstange (16) angeordnet ist, einem Strömungsgehäuse (30),
einem Ventilsitz (28), der im Strömungsgehäuse (30) angeordnet ist und auf den der Regelkörper (26) absenkbar ist und von dem der Regelkörper (26) abhebbar ist und
einem topfförmigen Abschirmelement (40), an dessen Boden (44) eine Öffnung (46) ausgebildet ist, durch die die Ventilstange (16) ragt,
wobei sich das topfförmige Abschirmelement (40) von einem Befestigungsflansch (36) des Aktorgehäuses (10) in das Strömungsgehäuse (30) erstreckt und sich Seitenwände (42) des Abschirmelementes (40) radial bis unmittelbar vor seitlich begrenzende Wände (38) und gegenüberliegend zu den seitlich begrenzenden Wänden (38) des Strömungsgehäuses (30) axial erstrecken, **dadurch gekennzeichnet, dass** sich vom offenen Ende des topfförmigen Abschirmelementes (40) mehrere Arme (52) erstrecken, über die das Abschirmelement (40) am Aktorgehäuse (10) oder zwischen Aktorgehäuse (10) und Strömungsgehäuse (30) befestigt ist.

2. Abgasventilvorrichtung für eine Verbrennungskraftmaschine nach Anspruch 1,
**dadurch gekennzeichnet, dass**
sich vom Rand (48) der Öffnung (46) am Boden (44) des Abschirmelementes (40) ein Kragen (50) in Richtung des Regelkörpers (26) erstreckt, dessen Innendurchmesser am zum Regelkörper (26) weisenden axialen Ende im Wesentlichen dem Außendurchmesser der Ventilstange (16) entspricht.

3. Abgasventilvorrichtung für eine Verbrennungskraftmaschine nach einem der Ansprüche 1 oder 2,
**dadurch gekennzeichnet, dass**
sich die Arme (52) in einem ersten Abschnitt (54) axial vom offenen Ende des topfförmigen Abschirmelementes (40) in Richtung des Aktorgehäuses (10) erstrecken.

4. Abgasventilvorrichtung für eine Verbrennungskraftmaschine nach Anspruch 3,
**dadurch gekennzeichnet, dass**
sich die Arme (52) in einem zweiten Abschnitt (56) abgewinkelt vom ersten Abschnitt (54) nach radial außen erstrecken.

5. Abgasventilvorrichtung für eine Verbrennungskraftmaschine nach einem der vorhergehenden Ansprüche,
**dadurch gekennzeichnet, dass**
das Abschirmelement (40) ein Tiefziehteil aus nicht rostendem Blech ist.

6. Abgasventilvorrichtung für eine Verbrennungskraftmaschine nach einem der vorhergehenden Ansprüche,
**dadurch gekennzeichnet, dass**
im Aktorgehäuse (10) am zum Abschirmelement (40) weisenden Boden (60) Taschen (58) ausgebildet sind, in die die Arme (52) des Abschirmelementes (40) greifen.

7. Abgasventilvorrichtung für eine Verbrennungskraftmaschine nach Anspruch 6,
**dadurch gekennzeichnet, dass**
die radiale Erstreckung der Taschen (58) kleiner ist als die radiale Erstreckung der Arme (52) des Abschirmelementes (40), so dass das Abschirmelement (40) über eine Federwirkung der Arme (52) in den Taschen (58) des Aktorgehäuses (10) eingeklemmt ist.

8. Abgasventilvorrichtung für eine Verbrennungskraftmaschine nach einem Ansprüche 6 oder 7,
**dadurch gekennzeichnet, dass**
ein radial äußerer Bereich der Taschen (58) durch das Strömungsgehäuse (30) verschlossen ist.

9. Abgasventilvorrichtung für eine Verbrennungskraftmaschine nach einem der vorhergehenden Ansprüche,
**dadurch gekennzeichnet, dass**
im Aktorgehäuse (10) axial zwischen dem Abschirmelement (40) und dem Aktor (24) ein Kühlmittelkanal (70) ausgebildet ist.

10. Abgasventilvorrichtung für eine Verbrennungskraftmaschine nach Anspruch 9,
**dadurch gekennzeichnet, dass**
der Kühlmittelkanal (70) radial außerhalb des Abschirmelementes (40) angeordnet ist.

11. Abgasventilvorrichtung für eine Verbrennungskraftmaschine nach einem der Ansprüche 9 oder 10,
**dadurch gekennzeichnet, dass**
das topfförmige Abschirmelement (40) mindestens einen Umfang aufweist, der einer Berührungsfläche (68) des Aktorgehäuses (10) an einem Befestigungsflansch (36) des Aktorgehäuses (10) zur zum Abschirmelement (40) entgegengesetzten Seite entspricht oder zwischen einem radial über das Abschirmelement (40) ragenden Bereich der Berührungsfläche (68) und der zum Abschirmelement (40) axial entgegengesetzten Seite des Befestigungsflansches (36) im Aktorgehäuse (10) der Kühlmittelkanal (70) angeordnet ist.

12. Abgasventilvorrichtung für eine Verbrennungskraftmaschine nach einem der vorhergehenden Ansprüche,
**dadurch gekennzeichnet, dass**
der Aktor (24) einen Elektromotor (12) mit nachgeschaltetem Getriebe (14) aufweist.

13. Abgasventilvorrichtung für eine Verbrennungskraftmaschine nach einem der vorhergehenden Ansprüche,
**dadurch gekennzeichnet, dass**
das Aktorgehäuse (10) ein Getriebegehäuseteil (20) und ein Elektromotorgehäuseteil (18) aufweist, wobei das Abschirmelement (40) am Boden des Getriebegehäuseteils (20) befestigt ist.

## Claims

1. An exhaust gas valve device for an internal combustion engine, comprising an actuator (24),
an actuator housing (10),
a valve rod (16), which can be moved in a translational manner via the actuator (24),
a control body (26), which is arranged on the valve rod (16),
a flow housing (30),
a valve seat (28), which is arranged in the flow housing (30) and onto which the control body (26) can be lowered, and off of which the control body (26) can be lifted, and
a pot-shaped shielding element (40), on the base (44) of which an opening (46) is formed, through which the valve rod (16) extends,
said pot-shaped shielding element extending from a fastening flange (36) of the actuator housing (10) into the flow housing (30), and side walls (42) of the shielding element (40) extending radially directly up to laterally delimiting walls (38) and, in the opposite direction, axially to the laterally delimiting walls (38) of the flow housing (30),
**characterized in that** a plurality of arms (52) extends from the open end of the pot-shaped shielding element (40), via which the shielding element (40) is fastened on the actuator housing (10) or between the actuator housing (10) and the flow housing (30).

2. The exhaust gas valve device for an internal combustion engine according to claim 1, **characterized in that** a collar (50) extends from the edge (48) of the opening (46) at the base (44) of the shielding element (40) in the direction of the control body (26), the inner diameter of which at the axial end pointing toward the control body (26) substantially corresponds to the outer diameter of the valve rod (16).

3. The exhaust gas valve device for an internal combustion engine according to any one of claims 1 or 2, **characterized in that** the arms (52) extend, in a first section (54), axially from the open end of the pot-shaped shielding element (40) in the direction of the actuator housing (10).

4. The exhaust gas valve device for an internal combustion engine according to claim 3, **characterized in that** the arms (52) extend, in a second section (56), radially outwardly at an angle from the first section (54).

5. The exhaust gas valve device for an internal combustion engine according to any one of the preceding claims, **characterized in that** the shielding element (40) is a deep-drawn part made from stainless metal sheet.

6. The exhaust gas valve device for an internal combustion engine according to any one of the preceding claims, **characterized in that** pockets (58) are formed in the actuator housing (10) on the base (60) facing the shielding element (40), into which the arms (52) of the shielding element (40) engage.

7. The exhaust gas valve device for an internal combustion engine according to claim 6, **characterized in that** the radial extension of the pockets (58) is shorter than the radial extension of the arms (52) of the shielding element (40), such that the shielding element (40) is clamped in the pockets (58) of the actuator housing (10) via a spring effect of the arms (52).

8. The exhaust gas valve device for an internal combustion engine according to any one of claims 6 or 7, **characterized in that** a radially outer region of the pockets (58) is closed by the flow housing (30).

9. The exhaust gas valve device for an internal combustion engine according to any one of the preceding claims, **characterized in that** a coolant channel (70) is formed in the actuator housing (10) axially between the shielding element (40) and the actuator (24).

10. The exhaust gas valve device for an internal combustion engine according to claim 9, **characterized in that** the coolant channel (70) is arranged radially outside of the shielding element (40).

11. The exhaust gas valve device for an internal combustion engine according to any one of claims 9 or 10, **characterized in that** the pot-shaped shielding element (40) has at least one circumference, which corresponds to a contact surface (68) of the actuator housing (10) at a fastening flange (36) of the actuator housing (10) toward the side opposite the shielding element (40) or the coolant channel (70) is arranged in the actuator housing (10) between a region of the contact surface (68) protruding beyond the shielding element (40) and the side of the fastening flange (36) axially opposite the shielding element (40).

12. The exhaust gas valve device for an internal combustion engine according to any one of the preceding claims, **characterized in that** the actuator (24) comprises an electric motor (12) having a downstream gearbox (14).

13. The exhaust gas valve device for an internal combustion engine according to any one of the preceding claims, **characterized in that** the actuator housing (10) comprises a gearbox housing part (20) and an electric motor housing part (18), wherein the shielding element (40) is fastened on the base of the gearbox housing part (20).

## Revendications

1. Dispositif de soupape d'échappement pour un moteur à combustion interne comprenant
un actionneur (24),
un carter d'actionneur (10),
une tige de soupape (16) pouvant être déplacée en translation par ledit actionneur (24),
un corps de réglage (26) disposé sur la tige de soupape (16),
un carter d'écoulement (30),
un siège de soupape (28) disposé dans ledit carter d'écoulement (30) et pouvant être abaissé sur le corps de réglage (26) et duquel ledit corps de réglage (26) peut être soulevé, et
un l'élément de blindage (40) en forme de pot, dans le fond (44) duquel est formé une ouverture (46) à travers laquelle fait saillie la tige de soupape (16),
ledit élément de blindage (40) en forme de pot s'étendant d'une bride de fixation (36) dudit carter d'actionneur (10) dans ledit carter d'écoulement (30), et des parois latérales (42) dudit élément de blindage (40) s'étendant radialement jusqu'à directement avant des parois latéralement limitantes (38) et, dans la direction opposée, axialement jusqu'aux parois latéralement limitantes (38) du carter d'écoulement (30), **caractérisé en ce que** plusieurs bras (52) s'étendent de l'extrémité ouverte dudit élément de blindage (40) en forme de pot, par lesquels ledit élément de blindage (40) est fixé au carter d'actionneur (10) ou entre ledit carter d'actionneur (10) et ledit carter d'écoulement (30).

2. Dispositif de soupape d'échappement pour un moteur à combustion interne selon la revendication 1, **caractérisé en ce qu'**un collier (50) s'étend du bord (48) de l'ouverture (46) au fond (44) dudit ledit élément de blindage (40) vers ledit corps de réglage (26), dont le diamètre intérieur à l'extrémité axiale orientée vers ledit corps de réglage (26) correspond essentiellement au diamètre extérieur de la tige de soupape (16).

3. Dispositif de soupape d'échappement pour un moteur à combustion interne selon une des revendications 1 ou 2, **caractérisé en ce que** dans une première section, les bras (32) s'étendent axialement de l'extrémité dudit élément de blindage (40) en forme de pot vers ledit carter d'actionneur (10).

4. Dispositif de soupape d'échappement pour un moteur à combustion interne selon la revendication 3, **caractérisé en ce que** dans une deuxième section (56), les bras (52) s'étendent radialement vers l'extérieur, coudé de la première section (54).

5. Dispositif de soupape d'échappement pour un moteur à combustion interne selon l'une quelconque des revendications précédentes, **caractérisé en ce que** ledit élément de blindage (40) est un élément embouti en tôle inoxydable.

6. Dispositif de soupape d'échappement pour un moteur à combustion interne selon l'une quelconque des revendications précédentes, **caractérisé en ce que** des poches (58) sont formées dans le carter d'actionneur (10) sur le fond (60) faisant face à l'élément de blindage (40), dans lequel s'engagent les bras (52) dudit élément de blindage (40).

7. Dispositif de soupape d'échappement pour un moteur à combustion interne selon la revendication 6, **caractérisé en ce que** l'extension radiale de la poche (58) est inférieur à l'extension radiale des bras (52) dudit élément de blindage (40), de sorte que l'élément de blindage (40) est coincé dans les poches (58) du carter d'actionneur (10).

8. Dispositif de soupape d'échappement pour un moteur à combustion interne selon l'une des revendications 6 ou 7, **caractérisé en ce qu'**une région radialement extérieure des poches (58) est obturée par le carter d'écoulement (30).

9. Dispositif de soupape d'échappement pour un moteur à combustion interne selon l'une quelconque des revendications précédentes, **caractérisé en ce qu'un** canal de liquide de refroidissement (70) est formé axialement dans le carter d'actionneur (10) entre l'élément de blindage (40) et l'actionneur (24).

10. Dispositif de soupape d'échappement pour un moteur à combustion interne selon la revendication 10, **caractérisé en ce que** le canal de liquide de refroidissement (70) est disposé radialement à l'extérieur dudit élément de blindage (40).

11. Dispositif de soupape d'échappement pour un moteur à combustion interne selon l'une des revendications 9 ou 10, **caractérisé en ce que** ledit élément de blindage (40) en forme de pot a au moins une circonférence qui correspond à une surface de contact (68) dudit carter d'actionneur (10) sur une bride de fixation (36) du carter d'actionneur (10) sur le côté opposé audit élément de blindage (40), ou le canal de liquide de refroidissement (70) est disposée entre une région de la surface de contact (68) radialement faisant saillie au-delà dudit élément de blindage (40) et le côté de la bride de fixation (36) axialement opposé à l'élément de blindage (40) dans le carter de l'actionneur (10).

12. Dispositif de soupape d'échappement pour un moteur à combustion interne selon l'une quelconque des revendications précédentes, **caractérisé en ce que** ledit actionneur (24) comprend un moteur électrique (12) avec un engrenage aval (14).

13. Dispositif de soupape d'échappement pour un moteur à combustion interne selon l'une quelconque des revendications précédentes, **caractérisé en ce que** le carter d'actionneur (10) comprend une partie de carter d'engrenage (20) et une partie de carter de moteur électrique (18), ledit élément de blindage (40) étant fixé au fond de la partie de carter d'engrenage (20).
